# EUROPEAN PATENT APPLICATION

(11) **EP 4 166 562 A1**
(43) Date of publication of application: **19.04.2023**
(21) Application number: 20875689.0
(22) Date of filing: 14.08.2020
(51) Int. Cl.: C07G 1/00, B01F 17/50

(54) **LIGNIN-BASED BLOCK COPOLYMER MOLECULAR-GRADE COMBINED POLYETHER, PREPARATION METHOD THEREFOR, AND APPLICATION THEREOF IN PREPARATION OF FLEXIBLE POLYURETHANE FOAM MATERIALS**

(30) Priority: 01.06.2020 CN 202010484459
(71) Applicant: Zhejiang Glory Home Furnishings Co., Ltd, Jiaxing, Zhejiang 314113 (CN)
(72) Inventor: DENG, Zehua, Jiaxing Zhejiang 314113 (CN); ZHANG, Lei, Jiaxing Zhejiang 314113 (CN); QIU, Guohao, Jiaxing Zhejiang 314113 (CN); GUO, Hailing, Jiaxing Zhejiang 314113 (CN); ZHENG, Qian, Jiaxing Zhejiang 314113 (CN)
(74) Representative: Zaboliene, Reda
(86) International application number: PCT/CN2020/109384
(87) International publication number: WO 2021/243851

(57) **Abstract**

A lignin-based block copolymer molecular-level combined polyether is based on lignosulfonate, a molecular chain of lignosulfonate is cut and embedded by using solvation effect of polyether polyol to form a molecular-level combined polyether that is polymerized and formed by aromatic polymer fragments of lignosulfonate and aliphatic polymer fragments of polyether polyol. The present invention uses a type of molecular mixing technology with a special structure to re-edit and splice the lignin molecular fragments of the hard segment on the microscopic level with the polymer polyols of the soft segment on the macroscopic level, to obtain a molecular-level combined polyether by a method of block copolymerization. Such a molecular-level combined polyether has dual characteristics of strong support and softness, which perfectly solves the problem how to balance strong support and softness of flexible polyurethane foam materials.

## Description

### TECHNICAL FIELD

The present application relates to a preparation method of a combined polyether, and particularly to a lignin-based block copolymer molecular-level combined polyether, a prepatration method thereof, and applications in preparing flexible polyurethane foam material, which belongs to the technical field of flexible polyurethane foam production.

### BACKGROUND

Lignin is a large class of natural polymers and the only class of aromatic natural polymers in nature, which serves as a strong support for the structure of plants. Lignosulfonate is the main waste of the paper industry, and its comprehensive utilization has always been a subject with significant social and economic benefits. However, lignosulfonate is extremely difficult too be degraded and processed due to its special aromatic basic structural unit and strong bond energy.

A large class of raw materials in the polyurethane industry is substances with active hydrogen, such as polyether polyols, polyester polyols, and vegetable oils with some hydroxyl groups. These substances are used as soft segment materials in the polyurethane structure to polymerize with the isocyanate used as hard segment materials to form soft and hard copolymerized polyurethane, so that the polyurethane exhibits excellent mechanical properties.

Nevertheless, in special application fields, such soft and hard copolymerized polyurethane still cannot fully meet the requirements, for example in a filed of flexible polyurethane foam materials. Flexible polyurethane foam is mainly used as an elastic material in products such as sofa cushions, mattresses and pillows. Due to the complex feeling of the human body, elastic material is required to have dual characteristics of softness and strong support which are sometimes contradictory to each other however.

### TECHNICAL PROBLEM

Softness and support are two particularly important indicators of flexible polyurethane foams. However, softness and support are contradictory to each other, which is difficult to balance. Therefore, higher requirements are demanded for polyurethane materials, that is, the polyurethane materials must provide strong support while being soft.

### SUMMARY

One purpose of the present invention is to provide a lignin-based block copolymer molecular-level combined polyether to solve the problems in the prior art.

The present invention further provides a preapartion method of lignin-based block copolymer molecular-level combined polyether.

The technical solutions adopted by the invention to solve the technical problems follow.

A lignin-based block copolymer molecular-level combined polyether is based on lignosulfonate, a molecular chain of lignosulfonate is cut and embedded by using solvation effect of polyether polyol to form a molecular-level combined polyether that is polymerized and formed by aromatic polymer fragments of lignosulfonate and aliphatic polymer fragments of polyether polyol, namely the lignin-based block copolymer molecular-level combined polyether.

The present invention adopts soft and hard copolymerized molecular-level combined polyether with a special structure as a soft segment, and prepares a new type of flexible polyurethane foam material by reacting with isocyanate. Such a flexible polyurethane foam material has rigid structure on the molecular level, meanwhile maintain open-cell characteristics, therefore a balance in softness and strong support is acheived, which is applicable to household products such as mattresses, sofa cushions and pillows.

Preferably, the foaming catalyst is made by mixing A and B in a weight ratio of 1:(0.5-2), where A is triethylenediamine or bis(2-dimethylaminoethyl) ether, and B is stannous octoate.

Preferably, the foam stabilizer is a silicone foam stabilizer.

Preferably, the flexible polyurethane foam material is made by foaming the following raw materials by weight:
100 parts of lignin-based block copolymer molecular-level combined polyether;
50-55 parts of isocyanate;
0.75-2 parts of foaming catalyst;
2-3 parts of water; and
1-3 parts of foam stabilizer.

A preparation method of a flexible polyurethane foam material with strong support and high elasticity includes:
materials preparation: preparing materials according to a formula of raw materials; and
foaming: mixing and stiring uniformly in a high-speed mixer, and foaming at a material temperature of 15-30°C for 30-180 seconds to obtain the flexible polyurethane foam material.

Compared with the prior art, the advantages of the present invention follow.
1. The present invention uses a type of molecular mixing technology with a special structure to re-edit and splice the lignin molecular fragments of the hard segment on the microscopic level with the polymer polyols of the soft segment on the macroscopic level, to obtain a molecular-level combined polyether by a method of block copolymerization. Such a molecular-level combined polyether has dual characteristics of strong support and softness, which perfectly solves the problem how to balance strong support and softness of flexible polyurethane foam materials.
2. Comparing with the comfort factor of the general flexible polyurethane foam material between 2.1-2.3, the comfort factor of the soft flexible polyurethane foam material prepared by the present invention can exceed 2.6, which is one of the very few flexible polyurethane foam materials that can break through 2.6 at present.

### BRIEF DESCRIPTION OF THE DRAWINGS

In order to explain the embodiments of the present invention or the technical solutions of the prior art more clearly, the following will briefly introduce the drawings that need to be used in the description of the embodiments or the prior art. Obviously, the drawings in the following description are merely for some of the embodiments of the present invention, those ordinarily skilled in the art can obtain other drawings based on these drawings without creative work. In such drawings:
FIG. 1 is a process flow diagram of a preparation method of molecular-level combined polyether based on lignosulfonate and a producing method of flexible polyurethane foam material according to one embodiment of the present invention;
FIG. 2 is shows one-dimensional density function curve of the flexible polyurethane foam material of the present invention; and
FIG. 3 is a structural diagram of the flexible polyurethane foam material inferred based on the SAXS chart of the present invention.

### DETAILED DESCRIPTION OF PREFERRED EMBODIMENTS

The technical solutions of the present invention will be further described in detail through specific embodiments below. It should be understood that the implementation of the present invention is not limited to the following embodiments, and any modifications and/or changes made to the present invention will fall into the protection scope of the present invention.

In the present invention, unless otherwise specified, all parts and percentages are units of weight, and the equipment and raw materials used may be purchased from the market or are commonly used in the field. The methods in the following embodiments, unless otherwise specified, are conventional in the art.

The reagents used in the following embodiments, unless otherwise specified, may be purchased from conventional biochemical reagent stores. Quantitative data in the following embodiments are all set to three repeated experiments, and averaged results are collected.

Standard sample is a flexible polyurethane foam material, purchased from Zhejiang Glory Home Furnishing Co., Ltd., with a model of 13324.

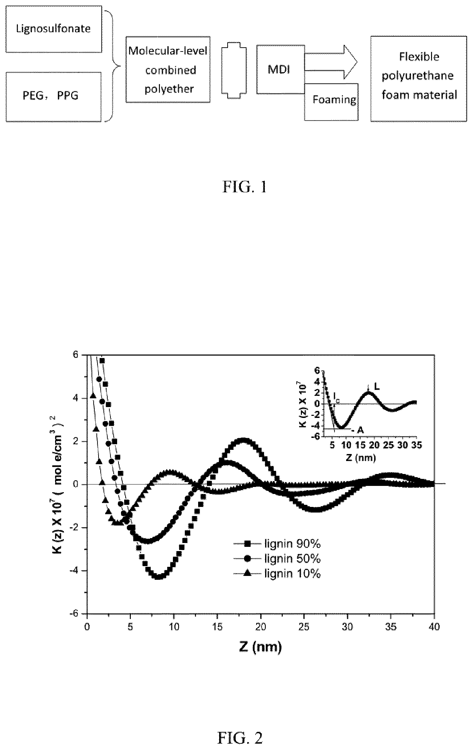

The core of the present invention is to provide a preparation method of lignin-based block copolymer molecular-level combined polyether, which is called Embodiment 1. **A**s shown in the flow chart in FIG. 1, the preparation method includeing the following steps:
1) pretreatment of lignosulfonate:
   mixing a lignosulfonate and a pretreatment reagent in a weight ratio of 1 :(2-10), and pretreating for 60-240 minutes at a temperature of 100-140°C and a pressure of 10-15 MPa;
2) removal of pretreatment reagent;
   after the pretreatment, removing the pretreatment reagent by vacuum distillation;
3) hard and soft copolymerization of lignosulfonate and polyether polyol:
   copolymerizing the lignosulfonate and the polyether polyol in a weight ratio of 1:(1-5), with a copolymerization temperature of 120-180°C and time of 1-4 hours, after the reaction, the lignin-based block copolymer molecular-level combined polyether is obtained.

Futher, the lignosulfonate is one or more selected from a group consisting of sodium lignosulfonate, calcium lignosulfonate and magnesium lignosulfonate.

Further, the polyether polyol is one or two selected from a group consisting of of polyethylene glycol (PEG) and polypropylene glycol (PPG), and in particular is one or more selected from a group consisting of PEG200, PEG400, PPG200 and PPG400.

In the preparation method, the pretreatment reagent is one or more selected from a group consisting of methanol, ethanol, propylene glycol and 1-4 butanediol.

Further, in the vacuum distillation of the step 2), a process condition with a temperature of 80-120°C, a mercury column of 750-1 mm, and time of 30-120 minutes is used.

On the basis of Embodiment 1, the above preparation method is further improved to obtain Embodiemnt 2. The difference between the present embodiment and the Embodiment 1 includes that, in the hard and soft copolymerization of step 3), sulfuric acid or phosphoric acid is used as a catalyst, and an addition amount of the catalyst is 2-7 wt% of a total weight of the lignosulfonate and the polyether polyol.

On the basis of Embodiment 1, the above preparation method is further improved to obtain Embodiemnt 3. The difference between the present embodiment and the Embodiment 1 includes that, the pretreatment reagent is ethanol.

On the basis of Embodiment 1, the above preparation method is further improved to obtain Embodiemnt 4. The difference between the present embodiment and the Embodiment 1 includes that, the pretreatment reagent is propylene glycol.

On the basis of Embodiment 1, the above preparation method is further improved to obtain Embodiemnts 5, 6 and 7. Table 1 shows raw material proportions, reagents and specific processes of each step involved in this method.

**Table 1**

| Embodiment | | | 5 | | 6 | | 7 |
|---|---|---|---|---|---|---|---|
| Step1) | Methanol | | 100 kg | | 100 kg | | 100 kg |
| | Sodium lignosulfonate | | 20 kg | | 50 kg | | 10 kg |
| | Process condition | | Temperature: 100°C | | Temperature: 120°C | | Temperature: 140°C |
| | | | Time: 60 minutes | | Time: 60 minutes | | Time: 120 minutes |
| | | | Pressure: 15 MPa | | Pressure: 10 MPa | | Pressure: 15 MPa |
| Step 2) | | | After pretreatment, vacuum distillation is performed for 60 minutes at a temperature of 100°C to form pretreated lignosulfonate TR-lignin-1 | | After pretreatment, vacuum distillation is performed for 60 minutes at a temperature of 100°C to form pretreated lignosulfonate TR-lignin-2 | | After pretreatment, vacuum distillation is performed for 60 minutes at a temperature of 100°C to form pretreated lignosulfonate TR-lignin-3 |
| Step 3) | Lignosulfonate | TR-lignin-1 | 100 kg | TR-lignin-2 | 100 kg | TR-lignin-3 | 100 kg |
| | Polyether polyol | PEG200 | 100 kg | PEG400 | 400 kg | PPG200 | 200 kg |
| | Catalyst | Phosphoric acid (concentration 85wt%) 6 kg | | Phosphoric acid (concentration 85wt%) 20kg | | Phosphoric acid (concentration 85wt%) 6 kg | |
| | Process condition | Temperature: 180°C | | Temperature: 160°C | | Temperature: 120°C | |
| | | Time: 120 minutes | | Time: 180 minutes | | Time: 160 minutes | |

The lignin-based block copolymer molecular-level combined polyethers prepared by the above embodiments were tested for properties, and the results are shown in Table 2.

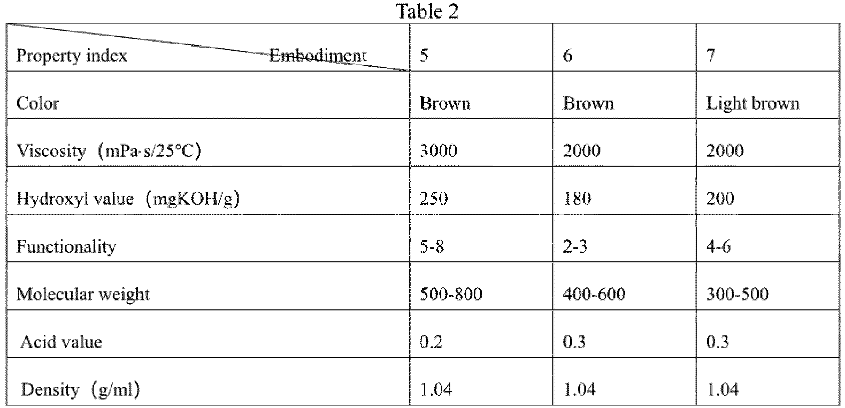

The factors that have a greater impact on the properties of molecular-level combined polyethers include solvent, catalyst, reaction temperature, and reaction time. According to the data in Table 2, it can be proved that sulfuric acid is a better catalyst than phosphoric acid, as it can cut the molecular chain of lignin at a lower dosage; and low temperature and relatively long time are beneficial to improve the properties of the product. In summary, the properties in Embodiment 7 are better. PPG is a better solvent than PEG. In practical applications, under the same ratio, the molecular-level combined polyether formed by PPG liquefaction has a lower viscosity, which is more conducive to production.

### Application Example 1

A process for using a lignin-based block copolymer molecular-level combined polyether is for preparing a flexible polyurethane foam material. In the present embodiment, the lignin-based block copolymer molecular-level combined polyether obtained from Embodiment 7 is used for preparing a flexible polyurethane foam material. The formula of the flexible polyurethane foam material follows:

| | |
|---|---|
| Lignin-based block copolymer molecular-level combined polyether | 100 kg; |
| Black material TDI | 55 kg; |
| Water | 2.0 kg; |
| Silicone foam stabilizer 580 | 1.5 kg; |
| Stannous octoate | 0.5 kg. |

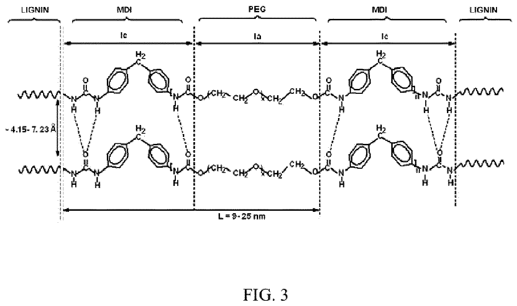

The above-mentioned raw materials are uniformly mixed and stirred in a high-speed mixer, and foamed at a material temperature of 15-25°C to obtain a flexible polyurethane foam material. Specifically, the black material TDI and MDI are both isocyanates. After testing, the technical indicators of the flexible polyurethane foam material are shown in Table 3. The one-dimensional density function curve of the flexible polyurethane foam material is shown in FIG. 2, and a structure diagram of the flexible polyurethane foam material inferred based on SAXS chart is shown in FIG. 3.

**Table 3**

| Properties | Indicators | |
|---|---|---|
| | Actual measurement | Standard sample (for comparison) |
| Density (kg/m³) | 45 | 45 |
| Indentation hardness deviation (N) | ±10 | ±13 |
| Rebound rate (%) | ≥40 | ≥35 |
| 75% compression set (%) | ≤6 | ≤8 |
| 40% indentation hardness loss after constant load repeated indentation fatigue (%) | ≤20 | ≤30 |
| Comfor factor (65/25) | 2.6 | 2.1 |

The data in Table 3 proves that, comparing with the standard sample, the flexible polyurethane foam material using lignin-based block copolymer molecular-level combined polyether has lower indentation hardness deviation (softer) and higher rebound rate (stronger support), and lower 40% indentation hardness loss after constant load repeated indentation fatigue (lifetime of strong support), therefore a higher comfort factor is acheived.

The various embodiments in this specification are described in a progressive manner. Each embodiment focuses on the differences from other embodiments, and the same or similar parts among the various embodiments can be referred to each other. For the device/product disclosed in the present applicaiton, since it corresponds to the method disclosed in the embodiments, the description is simplifed therefore, and the relevant parts can be referred to the description of the method parts.

The lignin-based block copolymer molecular-level combined polyether, the prepatration method thereof, and applications in preparing flexible polyurethane foam material,provided by the present invention are described in detail above. Specific examples are used in this article to illustrate the principle and implementation of the present invention, and the description of the above embodiments is only used to help understand the method and core idea of the present invention. It should be noted that for those ordinarily skilled in the art, without departing from the principle of the present invention, several improvements and modifications can be made to the present invention, which also fall within the protection scope of the present application defined by the appended claims.

## Claims

1. A lignin-based block copolymer molecular-level combined polyether, wherein the lignin-based block copolymer molecular-level combined polyether is based on lignosulfonate, a molecular chain of the lignosulfonate is cut and embedded by using solvation effect of polyether polyol to form a molecular-level combined polyether that is polymerized and formed by aromatic polymer fragments of lignosulfonate and aliphatic polymer fragments of polyether polyol, namely the lignin-based block copolymer molecular-level combined polyether.

2. The lignin-based block copolymer molecular-level combined polyether of claim **1,** wherein the lignosulfonate is one or more selected from a group consisting of sodium lignosulfonate, calcium lignosulfonate and magnesium lignosulfonate.

3. The flexible polyurethane foam material with strong support and high elasticity of claim **1,** wherein the polyether polyol is one or two selected from a group consisting of of polyethylene glycol (PEG) and polypropylene glycol (PPG).

4. The flexible polyurethane foam material with strong support and high elasticity of claim **1**, wherein the polyether polyol is one or more selected from a group consisting of PEG200, PEG400, PPG200 and PPG400.

5. A preparation method of a lignin-based block copolymer molecular-level combined polyether, comprising the following steps:
1) pretreatment of lignosulfonate:
mixing the lignosulfonate and a pretreatment reagent in a weight ratio of 1:(2-10), and pretreating for 60-240 minutes at a temperature of 100-140°C and a pressure of 10-15 MPa;
2) removal of pretreatment reagent:
after the pretreatment, removing the pretreatment reagent by vacuum distillation; and
3) hard and soft copolymerization of lignosulfonate and polyether polyol:
copolymerizing the lignosulfonate and the polyether polyol in a weight ratio of 1:(1-5), with a copolymerization temperature of 120-180°C, and time of 1-4 hours, after reaction, the lignin-based block copolymer molecular-level combined polyether is obtained.

6. The preparation method of claim **5,** wherein in the hard and soft copolymerization of step 3), sulfuric acid or phosphoric acid is used as a catalyst, and an addition amount of the catalyst is 2-7 wt% of a total weight of the lignosulfonate and the polyether polyol.

7. The preparation method of claim **5,** wherein the pretreatment reagent is one or more selected from a group consisting of methanol, ethanol, propylene glycol and 1-4 butanediol.

8. The preparation method of claim **5,** wherein in the vacuum distillation of the step 3), a process condition with a temperature of 80-120°C, a mercury column of 750-1 mm, and time of 30-120 minutes is used.

9. An applicaiton of the lignin-based block copolymer molecular-level combined polyether of claim **1** in preparing a flexible polyurethane foam material.
